# EUROPÄISCHE PATENTANMELDUNG

(11) **EP 1 286 098 A2**
(43) Veröffentlichungstag der Anmeldung: **26.02.2003**
(21) Anmeldenummer: 02013277.5
(22) Anmeldetag: 18.06.2002
(51) Int. Cl.: F16L 37/084

(54) **Schlauchleitung mit einer Anschlussmuffe**

(30) Priorität: 21.08.2001 DE 20113222 U
(71) Anmelder: TRUPLAST KUNSTSTOFFTECHNIK GMBH, D-35428 Langgöns (DE)
(72) Erfinder: Linhart, Georg Peter, 61206 Wöllstadt (DE)
(74) Vertreter: Oppermann, Ewald, Dipl.-Ing.

(57) **Zusammenfassung**

Bei einer Schlauchleitung mit einer Anschlußmuffe (2) greift die elastische Anschlußmuffe (2) in ein Anschlußrohr (3) über eine an ihr ausgebildete Dichtlippe (2a) abgedichtet ein. Um die Dichtwirkung der Dichtlippe (2a) auch bei Bewegungen der Muffe (2) und/oder des Schlauches (1) aufrechtzuerhalten, ist vorgesehen, daß die Muffe (2) von einem auf ihr axial festgelegten Ring (4) umgriffen ist, der mit mehreren federnden Zungen (4a) in zugeordnete Ausnehmungen (3a) des Anschlußrohres (3) einrastbar ist.

## Beschreibung

Die Erfindung bezieht sich auf eine Schlauchleitung mit einer Anschlußmuffe, wobei der aus thermoplastischem Material bestehende Schlauch innen glatt ist und außen wendelförmig verlaufende Wellentäler und Wellenberge aufweist und ferner an einem Ende eine mit ihm fest verbundene elastische Muffe trägt, die in ihrer Bestimmungslage in ein Anschlußrohr eingreift sowie an ihrem vorderen Ende mit einer zum Abdichten der Muffe gegen das Anschlußrohr ausgebildeten Dichtlippe versehen ist.

Es sind bereits derartige Schlauchleitungen bekannt. Die Dichtlippe der elastischen Muffe hat hierbei die Funktion, die Muffe gegen das Anschlußrohr abzudichten und ist zugleich Teil einer lösbaren Verbindung der Muffe mit dem Anschlußrohr, indem sie in ihrer Bestimmungsposition einen Radialwulst des Anschlußrohres hintergreift. Wenn die Muffe und/oder der Schlauch mehr oder minder stark bewegt werden, kann die Dichtwirkung der Dichtlippe beeinträchtigt werden.

Aufgabe der Erfindung ist es, die Schlauchleitung der eingangs genannten Art so auszubilden, daß die Dichtwirkung der Dichtlippe auch dann erhalten bleibt, wenn der Schlauch und/oder das Anschlußrohr mehr oder minder stark bewegt werden.

Die gestellte Aufgabe wird erfindungsgemäß entsprechend Anspruch 1 dadurch gelöst, daß die Muffe von einem auf ihr axial festgelegten, aus thermoplastischem Material bestehenden und axial steifen Ring umgriffen ist, in den mindestens zwei, jeweils um ihre Wurzel federnde sowie zum Einrasten in Ausnehmungen des Anschlußrohres ausgebildete Zungen eingeformt sind.

Zweckmäßige Aus- und Weiterbildungen des Erfindungsgegenstandes sind in den Ansprüchen 2 bis 5 angegeben.

Durch die erfindungsgemäße Lösung wird die Dichtlippe der Muffe auf ihre Dichtfunktion beschränkt und ist nicht mehr Teil einer lösbaren Verbindung zwischen dem Schlauch und dem Anschlußrohr. Die Funktion der lösbaren Verbindung zwischen dem Schlauch und dem Anschlußrohr hat nunmehr ein steifer Ring mit seinen federnden Zungen, die in ihrer Bestimmungslage in die zugeordneten Ausnehmungen des Anschlußrohres eingerastet sind.

Ein Ausführungsbeispiel der Erfindung ist in der Zeichnung rein schematisch dargestellt.

Es zeigen:
- Fig. 1: den Längsschnitt durch einen Schlauch, eine mit dem Schlauch verbundene Muffe und ein mit der Muffe lösbar verbundenes Anschlußrohr,
- Fig. 2: in perspektivischer Darstellung einen Ring mit federnden Zungen und
- Fig. 3: eine ungeschnittene Ansicht der in Fig. 1 dargestellten Schlauchleitung.

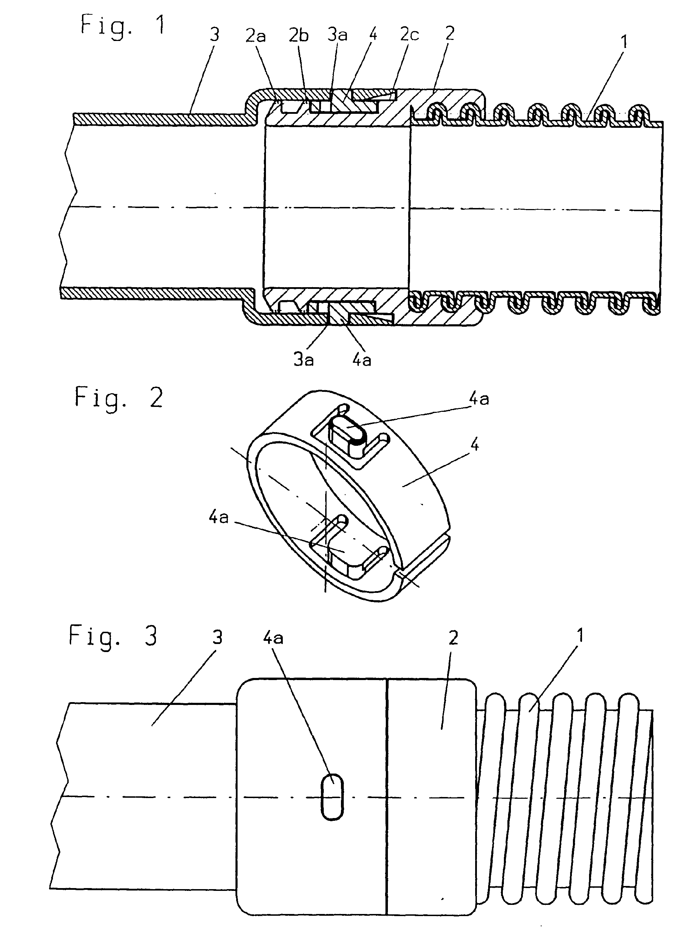

In den Fig. 1 und 3 ist mit 1 ein aus thermoplastischem Material bestehender Schlauch bezeichnet, der innen glatt ist und außen wendelförmig verlaufende Wellenberge und Wellentäler aufweist.

Der Schlauch 1 trägt an einem Ende eine mit ihm fest verbundene elastische Muffe 2, die auf den Schlauch 1 aufgeschraubt oder aufgespritzt sein kann. In ihrer Bestimmungslage greift die Muffe 2 in ein Anschlußrohr 3 ein. Am vorderen Ende der Muffe 2 ist eine Dichtlippe 2a angeformt, mit welcher die Muffe 2 gegen das Anschlußrohr 3 abdichtbar ist.

Die Muffe 2 ist von einem aus thermoplastischem Material bestehenden, axial steifen Ring 4 umgriffen, der in seiner Bestimmungslage zwischen einem Wulst 2b und einem umlaufenden Absatz 2c der Muffe 2 axial festgelegt ist. Der Wulst 2b und der Absatz 2c sind zwischen der Befestigungsstelle der Muffe 2 auf den Schlauch 1 und der Dichtlippe 2a angeordnet. Der Ring 4 ist mit mindestens zwei um ihre Wurzeln federnden Zungen 4a versehen, die zum Einrasten in Ausnehmungen 3a des Anschlußrohres 3 ausgebildet sind. Auf diese Weise ist die Dichtlippe 2a von der Funktion befreit, Teil einer lösbaren Verbindung des Schlauches 1 und des Anschlußrohres 3 zu sein. Sie ist ausschließlich auf ihre Dichtfunktion beschränkt.

Der Ring 4 kann dadurch in seine vorgesehene Lage eingebracht werden, daß die Muffe 2 radial zusammengedrückt wird. Wenn der Ring 4 längs geschlitzt ist, ist er aber auch aufbiegbar, um in seine Bestimmungslage eingebracht zu werden.

## Patentansprüche

1. Schlauchleitung mit einer Anschlußmuffe, wobei der aus thermoplastischem Material bestehende Schlauch (1) innen glatt ist und außen wendelförmig verlaufende Wellentäler und Wellenberge aufweist und ferner an einem Ende eine mit ihm fest verbundene elastische Muffe (2) trägt, die in ihrer Bestimmungslage in ein Anschlußrohr (3) eingreift sowie an ihrem vorderen Ende mit einer zum Abdichten der Muffe (2) gegen das Anschlußrohr (3) ausgebildeten Dichtlippe (2a) versehen ist, **dadurch gekennzeichnet, daß** die Muffe (2) von einem auf ihr axial festgelegten, aus thermoplastischem Material bestehenden und axial steifen Ring (4) umgriffen ist, in den mindestens zwei, jeweils um ihre Wurzel federnde sowie zum Einrasten in Ausnehmungen (3a) des Anschlußrohres (3) ausgebildete Zungen (4a) eingeformt sind.

2. Schlauchleitung nach Anspruch 1, **dadurch gekennzeichnet, daß** der Ring (4) zwischen einem Wulst (2b) und einem umlaufenden Absatz (2c) der Muffe (2) axial festgelegt ist, und daß der Wulst (2b) und der Absatz (2c) zwischen der Befestigungsstelle der Muffe (2) auf dem Schlauch (1) und der Dichtlippe (2a) angeordnet sind.

3. Schlauchleitung nach Anspruch 1 und 2, **dadurch gekennzeichnet, daß** der Ring (4) längs geschlitzt ist.

4. Schlauchleitung nach Anspruch 1 bis 3, **dadurch gekennzeichnet, daß** die Muffe (2) auf den Schlauch (1) aufgeschraubt ist.

5. Schlauchleitung nach Anspruch 1 bis 3, **dadurch gekennzeichnet, daß** die Muffe (2) auf den Schlauch (1) aufgespritzt ist.
